**Europäisches Patentamt**

**European Patent Office**

**Office européen des brevets**

(19)

(11) Numéro de publication : **0 112 790
B1**

(12)

# FASCICULE DE BREVET EUROPÉEN

(45) Date de publication du fascicule du brevet :
21.10.87

(51) Int. Cl.⁴ : **B 22 D 19/00**, B 22 C   9/08,
F 16 D 65/10

(21) Numéro de dépôt : **83440064.0**

(22) Date de dépôt : **19.12.83**

(54) **Procédé de moulage d'un rotor de frein à couronne.**

(30) Priorité : 23.12.82 FR 8221789

(43) Date de publication de la demande :
04.07.84 **Bulletin 84/27**

(45) Mention de la délivrance du brevet :
21.10.87 **Bulletin 87/43**

(84) Etats contractants désignés :
**BE DE GB IT NL SE**

(56) Documents cités :
**FR-A- 1 004 468
FR-A- 2 058 643
FR-A- 2 395 795
GB-A-   387 983**

(73) Titulaire : **KUHN S.A.
4, Impasse des Fabriques
F-67700 Saverne (FR)**

(72) Inventeur : **Weber, André
78, Côte de Saverne
F-67700 Saverne (FR)**

## Description

La présente invention concerne un procédé de moulage d'un rotor de frein à couronne, lequel se compose d'un voile réalisé antérieurement, dont le périmètre extérieur est lié à une couronne sensiblement cylindrique réalisée lors dudit moulage.

Dans le brevet GB-A-387.933, ayant toutes les caractéristiques du préambule de la revendication 1, on connaît un rotor de frein à tambour composé d'un voile qui peut être obtenu par emboutissage d'une tôle et d'un tronçon de cylindre en fonte constituant par sa face interne la surface de frottement du frein qui est coulé sur le voile précité. Le but recherché par cet agencement est de créer une liaison basée sur les formes d'ancrage et de mettre sous contrainte radialement le voile du rotor. Cette mise sous contrainte est obtenue par la contraction du tronçon de cylindre coulé autour de ce voile qui apparaîtra lors du refroidissement de celui-ci.

La compression radiale de ce voile, ainsi que la forme du tronçon cylindrique, contribuent à éviter la déformation en tronc de cône dudit rotor de frein à tambour, due à la pression de freinage agissant radialement et vers l'extérieur du rotor et à l'échauffement de celui-ci lors des phases de freinage.

L'objectif de la présente invention est de réaliser au moindre coût ladite couronne et de la lier au voile qui peut par exemple être réalisé en tôle emboutie, de telle sorte que leur liaison soit saine, c'est-à-dire que la matière du voile et la matière de la couronne soient correctement soudées et que la matière de la couronne présente le moins de retassures possible. Par ailleurs, pour faciliter l'usinage ultérieur de la couronne, il est important que la matière de la couronne présente sensiblement partout une dureté sensiblement constante.

Dans ce but, le procédé de moulage selon la présente invention d'un rotor de frein à couronne consiste à alimenter l'empreinte de la couronne par l'intermédiaire d'une attaque de coulée qui présente une épaisseur relativement faible par rapport à la largeur de la couronne et qui s'étend dans le voisinage du périmètre extérieur du voile où se fera la liaison voile-couronne par fusion superficielle du voile et sur sensiblement toute la circonférence de ladite empreinte.

Avec cette dimension et cette disposition particulière de l'attaque de coulée, tous les objectifs énumérés ci-dessus sont remplis.

En effet, avec ce procédé, on obtient une couronne dont la matière présente une dureté sensiblement constante sur sensiblement toute sa surface extérieure et intérieure. Cette dureté sera uniquement différente dans la zone de l'attaque de coulée. Mais, compte tenu de la faible épaisseur de cette attaque de coulée, cette zone est relativement mince eu égard de la largeur de la couronne. Cette sensible constance de la dureté de la matière de la couronne facilitera l'usinage ultérieur de ladite couronne dans la mesure où les tolérances d'usinage pourront être mieux respectées et les défauts de forme, diminués. Cette facilité de l'usinage entraîne en outre une diminution du coût dudit usinage.

Par ailleurs, comme l'attaque de coulée se situe dans le voisinage du périmètre extérieur du voile et sensiblement tout autour de celui-ci, la fonte qui pénètre dans l'empreinte, échauffe ledit périmètre extérieur du voile, de sorte qu'en fin de remplissage de l'empreinte, lorsque se crée la soudure entre le voile et la couronne, la température élevée de la surface extérieure et/ou intérieure dudit périmètre extérieur du voile favorise cette soudure et contribue à la création d'une liaison rigide. Lors de la coulée, il faudra que la température de la fonte liquide et le temps de coulée soient tels que la surface extérieure et/ou intérieure du périmètre extérieur du voile commencent sensiblement à fondre, mais que l'âme dudit périmètre extérieur du voile reste sensiblement solide. Ainsi, la fonte et le métal de la surface du périmètre extérieur du voile se soudent correctement sans que la résistance du voile ne soit sensiblement modifiée dans cette zone. On évite ainsi qu'en charge, il se produise une rupture du voile dans le voisinage de la couronne.

D'autre part, compte tenu du fait que l'épaisseur de l'attaque de coulée est relativement faible, sa dureté est donc relativement élevée puisque la fonte qui séjourne dans cette attaque de coulée après remplissage de l'empreinte, refroidit très rapidement. Cette dureté élevée rend la fonte très cassante et ce phénomène peut être avantageusement utilisé pour séparer la couronne de son dispositif de coulée. Il suffit en effet d'un léger choc ou d'une simple vibration, pour que tout le dispositif de coulée se détache sensiblement exactement au niveau de la couronne. Ainsi, toute opération ultérieure d'ébarbage est superflue et peut donc être supprimée, ce qui diminue le prix de revient production du rotor de frein.

En sus, cette diminution de l'épaisseur de l'attaque de coulée contribue à l'obtention d'une liaison voile-couronne saine, car elle permet de diminuer considérablement, voire supprimer, le phénomène de formation de retassures. En effet, compte tenu du refroidissement très rapide de la fonte séjournant dans l'attaque de coulée, tout retour de fonte encore liquide depuis la couronne vers le dispositif de coulée lors du refroidissement est impossible.

Selon une autre caractéristique de l'invention, on alimente l'attaque de coulée par un canal de distribution qui s'étend sensiblement autour de l'empreinte.

Ce canal est lui-même alimenté par le système d'alimentation du moule.

Avantageusement la surface à travers laquelle s'écoule la fonte depuis l'attaque de coulée dans l'empreinte, est relativement inférieure à la surface à travers laquelle s'écoule la fonte depuis le système d'alimentation dans le canal de distribution.

De ce fait, lors de la coulée, la fonte remplit très rapidement le canal de distribution avant de vraiment s'écouler à travers l'attaque de coulée dans l'empreinte. Ceci garantit un remplissage uniforme sensiblement en chaque point de la circonférence de l'empreinte dans la zone du périmètre extérieur du voile et entraîne par conséquent un échauffement très régulier dudit périmètre extérieur du voile, contribuant ainsi à l'obtention d'une bonne soudure entre le voile et la couronne.

Selon une solution préférentielle, on dispose l'attaque de coulée et/ou le canal de distribution tout autour de l'empreinte. Cette disposition améliorera encore les différents résultats cités ci-dessus.

D'autres caractéristiques sont contenues dans les autres sous-revendications, ainsi que dans la description ci-dessous nullement limitative, d'un exemple de mise en œuvre du procédé de moulage selon l'invention, d'un rotor de frein à couronne. Sur le dessin annexé :

La figure 1   représente une vue en perspective d'un rotor de frein à couronne pour lequel le procédé de moulage de la couronne selon l'invention a été conçu.

La figure 2   représente une coupe du rotor de frein à couronne de la figure 1, par un plan contenant l'axe de symétrie (5).

La figure 3   représente une coupe du moule qui met en œuvre le procédé de moulage selon la présente invention.

La figure 4   représente une vue de dessus qui visualise la disposition du dispositif de coulée.

La figure 5   représente une variante de la disposition de l'attaque de coulée.

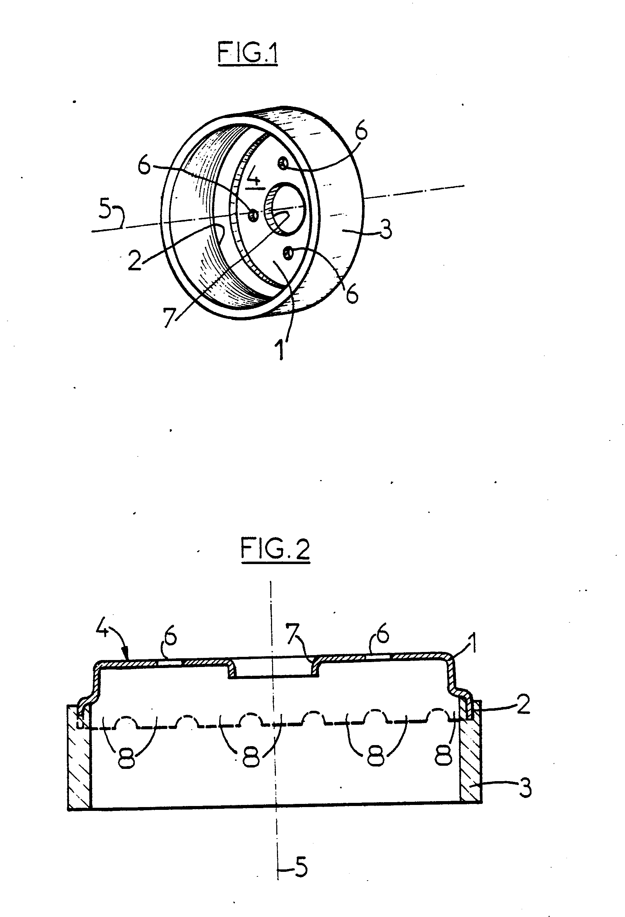

La figure 1 représente une vue en perspective d'un rotor de frein à couronne. Celui-ci se compose d'un voile (1) lié par son périmètre extérieur (2) à une couronne cylindrique (3) en fonte. Le voile (1) est une pièce en tôle emboutie qui comporte dans sa face (4) perpendiculaire à l'axe de symétrie (5), un certain nombre de trous (6) qui servent à assembler ledit rotor sur le moyeu d'une roue non représentée, et un trou (7) par lequel passe l'arbre dudit moyeu.

Sur la figure 2, on voit que le périmètre extérieur (2) du voile (1) comporte un certain nombre de languettes (8) qui servent à augmenter la tenue en torsion de la liaison entre le voile (1) et la couronne (3).

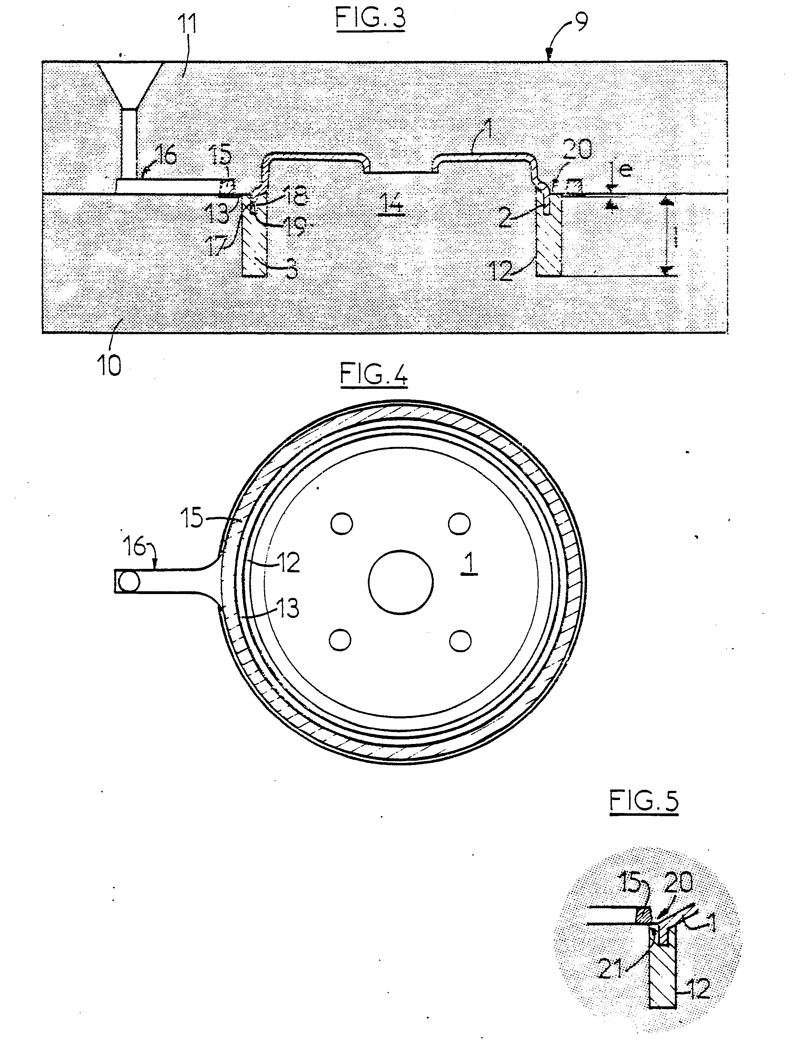

Le procédé de moulage de la couronne (3), selon la présente invention, apparaîtra à la lumière de la description du moule (9) représenté sur la figure 3. Ce moule (9) se compose d'un châssis inférieur (10) et d'un châssis supérieur (11). Dans le châssis inférieur (10) on a réalisé une empreinte (12) qui permettra de couler la couronne (3), une attaque de coulée (13) ainsi qu'un support (14) qui a sensiblement une forme complémentaire d'une partie de l'intérieur du voile (1), de sorte que ledit voile (1) puisse être centré sur ce support (14) et maintenu par celui-ci lors de la fermeture du moule (9) par le châssis supérieur (11).

Le châssis supérieur (11) comporte une empreinte ayant une forme sensiblement complémentaire de l'extérieur du voile (1). Ainsi, lorsque le moule (9) est fermé, le voile (1) est parfaitement bloqué lors de la coulée. Le châssis supérieur (11) comporte par ailleurs un canal de distribution (15) de l'attaque de coulée (13) ainsi qu'un système d'alimentation (16) de ce canal de distribution (15).

Tel que visible sur la figure 3, l'attaque de coulée (13) a la forme d'un disque annulaire d'une épaisseur (e) relativement faible par rapport à la largeur (1) de la couronne (3). Cette épaisseur (e) est avantageusement comprise entre 0,5 et 3 millimètres, mais se situe de préférence aux environs de 1 millimètre.

Par ailleurs, sur la figure 3, on voit également que l'attaque de coulée (13) s'étend dans la zone du périmètre extérieur (2) du voile (1) où se fait la soudure entre ledit voile (1) et la couronne (3). En sus, l'attaque de coulée (13) est disposée de telle manière que le flot de fonte qui arrive dans l'empreinte (12) possède une direction sensiblement horizontale.

Ainsi, compte tenu de la faible épaisseur (e) et de la disposition de cette attaque de coulée (13), et de la pression qui règne dans le flot de fonte liquide, ce dernier arrive dans l'empreinte (12) suivant une direction sensiblement horizontale, comme dit plus haut, et avec une certaine vitesse, ce qui lui permet d'aller frapper le périmètre extérieur (2) du voile (1) qui s'étend librement dans l'empreinte (12), et ainsi élever la température dudit périmètre extérieur (2) du voile (1) par contact.

Il est bien entendu évident que l'attaque de coulée (13) ne doit pas nécessairement être positionnée pour que la fonte frappe le voile (1). Dans ce cas, l'échauffement se produira lors du passage de la fonte à proximité dudit voile (1).

Lorsque le niveau de la fonte dans l'empreinte (12) atteint le périmètre extérieur (2) du voile (1), la surface extérieure (17) et/ou la surface intérieure (18) dudit périmètre extérieur (2) du voile (1) devront avoir une température telle que le métal de ces surfaces dudit périmètre extérieur (2) commencent sensiblement à fondre alors que l'âme (19) reste solide. Dans ce cas, la soudure entre la fonte et le métal du voile (1) s'opère correctement sans que la résistance dudit voile (1) ne soit grandement modifiée. De ce fait, tout risque de rupture en charge du voile (1) au niveau de la couronne (3) est écarté. Pour réaliser ceci, il faut adapter la température de la fonte liquide lors de la coulée et la vitesse de remplissage du moule (9).

Pour améliorer la soudure entre le périmètre extérieur (2) du voile (1) et la couronne (3), il est avantageux de dégraisser le voile (1) et/ou de le grenailler avant la coulée.

Afin de remplir relativement uniformément l'empreinte (12), il est avantageux que la surface à travers laquelle passe la fonte liquide depuis l'attaque de coulée (13) dans l'empreinte (12) soit relativement inférieure à la surface à travers laquelle passe ladite fonte liquide depuis le système d'alimentation (16) dans le canal de distribution (15).

Ainsi, l'attaque de coulée (13) forme une sorte d'étranglement, de telle manière que la fonte remplit sensiblement dans un premier temps le canal de distribution (15) avant de s'écouler uniformément dans l'empreinte (12).

Sur la figure 4, on voit que l'attaque de coulée (13) et le canal de distribution (15) s'étendent tout autour de l'empreinte (12). Cette disposition garantit l'alimentation la plus uniforme possible de l'empreinte (12).

Dans l'exemple décrit, le canal de distribution (15) est situé à une certaine distance de l'empreinte (12). Ceci est dû au fait que l'épaisseur de l'anneau de sable (20) compris entre le canal de distribution (15) et le voile (1), doit avoir une certaine valeur pour que ledit anneau de sable (20) ne s'effrite pas lors de la fermeture du moule (9) ou lors de la coulée. Il est cependant également possible, tel que visible sur la figure 5, si la forme du voile (1) le permet, que la distance entre le canal de distribution (15) et l'empreinte (12) soit plus petite, voire nulle. Dans ce dernier cas, l'attaque de coulée se réduira à un simple étranglement (21) entre le canal de distribution (15) et l'empreinte (12), dont la surface sera sensiblement identique à la surface de communication entre l'attaque de coulée (13) des figures 3 et 4 et l'empreinte (12).

Alors que la description précédente porte sur un exemple préféré de mise en œuvre du procédé de moulage d'un rotor de frein à couronne, selon la présente invention, il est évident que diverses modifications peuvent encore y être apportées, notamment dans le domaine des équivalences techniques, sans pour autant sortir du cadre de la présente invention, telle que définie dans les revendications.

**Revendications**

1. Procédé de moulage d'un rotor de frein à couronne lequel se compose d'un voile (1) réalisé antérieurement, dont le périmètre extérieur est lié à une couronne (3) sensiblement cylindrique réalisée lors dudit moulage, caractérisé par le fait qu'on alimente l'empreinte (12) de la couronne (3) par l'intermédiaire d'une attaque de coulée (13) qui présente une épaisseur (e) relativement faible par rapport à la largeur de la couronne et qui s'étend dans le voisinage du périmètre extérieur (2) du voile (1) où se fera la liaison voile-couronne par fusion superficielle du voile et sur sensiblement toute la circonférence de ladite empreinte (12).

2. Procédé de moulage d'un rotor de frein à couronne selon la revendication 1, caractérisé par le fait qu'on alimente l'attaque de coulée (13) par un canal de distribution (15) qui s'étend sensiblement tout autour de l'empreinte (12) de la couronne (3).

3. Procédé de moulage d'un rotor de frein à couronne selon la revendication 2, caractérisé par le fait qu'on alimente l'empreinte (12) par une attaque de coulée (13) de sorte que la surface à travers laquelle s'écoule la fonte depuis ladite attaque de coulée (13) dans l'empreinte (12) est relativement inférieure à la surface à travers laquelle s'écoule la fonte depuis le système d'alimentation (16) dans le canal de distribution (15).

4. Procédé de moulage d'un rotor de frein à couronne selon l'une des revendications précédentes, caractérisé par le fait qu'on alimente l'empreinte (12) par une attaque de coulée (13) dont l'épaisseur (e) est comprise entre 0,5 et 3 millimètres.

5. Procédé de moulage d'un rotor de frein à couronne selon la revendication 4, caractérisé par le fait qu'on alimente l'empreinte (12) par une attaque de coulée (13) dont l'épaisseur (e) est environ de 1 millimètre.

6. Procédé de moulage d'un rotor de frein à couronne selon l'une des revendications précédentes, caractérisé par le fait qu'on alimente l'empreinte (12) par une attaque de coulée (13) qui est disposée de telle sorte que le flot de fonte possède une direction sensiblement horizontale lorsqu'il pénètre dans ladite empreinte (12).

7. Procédé de moulage d'un rotor de frein à couronne selon l'une des revendications précédentes, caractérisé par le fait qu'on alimente l'empreinte (12) de sorte que le flot de fonte frappe le périmètre extérieur (2) du voile (1).

8. Procédé de moulage d'un rotor de frein à couronne selon l'une des revendications 1 à 6, caractérisé par le fait qu'on alimente l'empreinte (12) de sorte que le flot de fonte passe à proximité du périmètre extérieur (2) du voile (1).

9. Procédé de moulage d'un rotor de frein à couronne selon l'une des revendications précédentes, caractérisé par le fait qu'on élève la température du périmètre extérieur (2) du voile (1) de telle sorte que la surface extérieure (17) et/ou la surface intérieure (18) dudit périmètre extérieur (2) commencent à fondre, et que l'âme (19) reste solide.

10. Procédé de moulage d'un rotor de frein à couronne selon l'une des revendications 2 à 9, caractérisé par le fait qu'on alimente l'empreinte (12) par une attaque de coulée (13) qui se réduit à un simple étranglement (21) entre le canal de distribution (15) et ladite empreinte (12).

11. Procédé de moulage d'un rotor de frein à couronne selon l'une des revendications précédentes, caractérisé par le fait qu'on dispose l'attaque de coulée (13, 21) tout autour de l'empreinte (12).

12. Procédé de moulage d'un rotor de frein à couronne selon l'une des revendications 2 à 11, caractérisé par le fait qu'on dispose le canal de distribution (15) tout autour de l'empreinte (12).

## Claims

1. A method of casting a crown brake rotor which is composed of a disc (1) produced previously, the outer perimeter of which is joined to a substantially cylindrical crown (3) produced at the time of the said casting, characterized by the fact that the mould (12) for the crown (3) is fed by way of a pouring gate (13) which exhibits a relatively small thickness (e) with respect to the width of the crown and which extends in the vicinity of the outer perimeter (2) of the disc (1) where the join between the disc and the crown will be effected by surface fusion of the disc and along substantially the whole circumference of the said mould (12).

2. A method of casting a crown brake rotor as in Claim 1, characterized by the fact that the pouring gate (13) is fed through a distribution channel (15) which extends substantially right round the mould (12) for the crown (3).

3. A method of casting a crown brake rotor as in Claim 2, characterized by the fact that the mould (12) is fed through a pouring gate (13) so that the area across which the molten metal flows from the said pouring gate (13) into the mould (12) is relatively less than the area across which the molten metal flows from the feed system (16) into the distribution channel (15).

4. A method of casting a crown brake rotor as in one of the preceding Claims, characterized by the fact that the mould (12) is fed through a pouring gate (13) the thickness (e) of which lies between 0.5 and 3 millimetres.

5. A method of casting a crown brake rotor as in Claim 4, characterized by the fact that the mould (12) is fed through a pouring gate (13) the thickness (e) of which is about 1 millimetre.

6. A method of casting a crown brake rotor as in one of the preceding Claims, characterized by the fact that the mould (12) is fed through a pouring gate (13) which is arranged so that the flow of molten metal has a substantially horizontal direction when it penetrates into the said mould (12).

7. A method of casting a crown brake rotor as in one of the preceding Claims, characterized by the fact that the mould (12) is fed so that the flow of molten metal strikes the outer perimeter (2) of the disc (1).

8. A method of casting a crown brake rotor as in one of the Claims 1 to 6, characterized by the fact that the mould (12) is fed so that the flow of molten metal passes close to the outer perimeter (2) of the disc (1).

9. A method of casting a crown brake rotor as in one of the preceding Claims, characterized by the fact that the temperature of the outer perimeter (2) of the disc (1) is raised so that the outer surface (17) and/or the inner surface (18) of the said outer perimeter (2) starts to melt and that the heart (19) remains solid.

10. A method of casting a crown brake rotor as in one of the Claims 2 to 9, characterized by the fact that the mould (12) is fed through a pouring gate (13) which is reduced to a simple choke (21) between the distribution channel (15) and the said mould (12).

11. A method of casting a crown brake rotor as in one of the preceding Claims, characterized by the fact that the pouring gate (13, 21) is arranged right round the mould (12).

12. A method of casting a crown brake rotor as in one of the Claims 2 to 11, characterized by the fact that the distribution channel (15) is arranged right round the mould (12).

## Patentansprüche

1. Giessverfahren eines Bremsrandrotors, der aus einer früher gefertigten Rückwand (1) besteht, deren äusseren Umfang mit einem etwa zylindrischen Rand (3) verbunden ist, der während des obengenannten Giessverfahrens realisiert wird, dadurch gekennzeichnet, dass man die Abformung (12) des Randes (3) mittels eines Zulaufes (13) beliefert, der im Vergleich mit der Randbreite, eine verhältnismässig schwache Dicke (e) aufweist, und der sich in der Nähe des äusseren Umfangs (2) des Randes (1), wo die Verbindung Rückwand-Rand durch oberflächliches Schmelzen der Rückwand stattfinden wird, und praktisch auf dem ganzen Umfang der genannten Abformung (12), erstreckt.

2. Giessverfahren eines Bremsrandrotors nach dem Patentanspruch 1, dadurch gekennzeichnet, dass man den Zulauf (13) mittels eines Angussverteilers (15) angiesst, der sich praktisch rund um die Abformung (12) des Randes (3) erstreckt.

3. Giessverfahren eines Bremsrandrotors nach dem Patentanspruch 2, dadurch gekennzeichnet, dass man die Abformung (12) durch einen Zulauf (13) angiesst, sodass die Fläche, durch welche der Guss aus dem genannten Zulauf (13) in die Abformung (12) fliesst, verhältnismässig kleiner ist als die Fläche, durch welche der Guss aus dem Zulaufsystem (16) in den Angussverteiler (15) fliesst.

4. Giessverfahren eines Bremsrandrotors nach einem der vorigen Patentansprüche, dadurch gekennzeichnet, dass man die Abformung (12) durch einen Zulauf (13), dessen Dicke (e) zwischen 0,5 und 3 Millimeter beträgt, angiesst.

5. Giessverfahren eines Bremsrandrotors nach dem Patentanspruch 4, dadurch gekennzeichnet, dass man die Abformung (12) durch einen Zulauf (13), dessen Dicke (e) ungefähr 1 Millimeter beträgt, angiesst.

6. Giessverfahren eines Bremsrandrotors nach einem der vorigen Patentansprüche, dadurch gekennzeichnet, dass man die Abformung (12) durch einen Zulauf (13) angiesst, der so angeordnet ist, dass die Gussmasse praktisch eine waagrechte Richtung hat, wenn sie in die genannte Abformung (12) eindringt.

7. Giessverfahren eines Bremsrandrotors nach einem der vorigen Patentansprüche, dadurch gekennzeichnet, dass man die Abformung (12) angiesst, sodass die Gussmasse auf den äusseren Umfang (2) der Rückwand (1) trifft.

8. Giessverfahren eines Bremsrandrotors nach einem der Patentansprüche 1 bis 6, dadurch gekennzeichnet, dass man die Abformung (12) angiesst, sodass die Gussmasse in der Nähe des äusseren Umfangs (2) der Rückwand (1) durchfliesst.

9. Giessverfahren eines Bremsrandrotors nach einem der vorigen Patentansprüche, dadurch gekennzeichnet, dass man die Temperatur des äusseren Umfangs (2) der Rückwand (1) erhöht, sodass die äussere Fläche (17) und/oder die innere Fläche (18) des genannten äusseren Umfangs (2) anfangen zu schmelzen, und der Kern (19) hart bleibt.

10. Giessverfahren eines Bremsrandrotors nach einem der Patentansprüche 2 bis 9, dadurch gekennzeichnet, dass man die Abformung (12) durch einen Zulauf (13) angiesst, der sich zwischen dem Angussverteiler (15) und der genannten Abformung (12) zu einer einfachen Drosselung (21) reduziert.

11. Giessverfahren eines Bremsrandrotors nach einem der vorigen Patentansprüche, dadurch gekennzeichnet, dass man den Zulauf (13, 21) ganz um die Abformung (12) herum legt.

12. Giessverfahren eines Bremsrandrotors nach einem der Patentansprüche 2 bis 11, dadurch gekennzeichnet, dass man den Angussverteiler (15) ganz um die Abformung (12) herum legt.

## FIG.1

## FIG.2

FIG.3

FIG.4

FIG.5